# FASCICULE DE BREVET EUROPEEN

(11) **EP 0 841 209 B1**
(45) Date de publication et mention de la délivrance du brevet: **16.08.2001**
(21) Numéro de dépôt: 97402592.6
(22) Date de dépôt: 31.10.1997
(51) Int. Cl.: B60N 2/28

(54) **Siège pour enfant adaptable sur un siège de véhicule automobile**
Auf einem Kraftfahrzeugsitz anzubringender Kindersitz
Child's seat adapted for a vehicle seat

(30) Priorité: 06.11.1996 FR 9613719
(43) Date de publication de la demande: 13.05.1998
(73) Titulaire: AUTOMOBILES PEUGEOT, 75116 Paris (FR); AUTOMOBILES CITROEN, 92200 Neuilly-sur-Seine (FR)
(72) Inventeur: Jacquemot, Pierre, 92250 La Garenne Colombes (FR); Roy, Jean-Pascal, 77340 Pontault-Combault (FR)
(74) Mandataire: Seytre, Françoise

(56) Documents cités:
- EP-A- 0 403 853
- EP-A- 0 619 201
- EP-A- 0 694 437
- EP-A- 0 703 113
- EP-A- 0 714 806
- WO-A-97/39913
- CH-A- 675 230
- DE-U- 9 412 855
- US-A- 5 383 707

## Description

L'invention concerne un siège pour enfant adaptable sur un siège de véhicule automobile ainsi que le siège de véhicule associé.

On connaît des sièges pour enfant qui peuvent être adaptés et fixés sur un siège de véhicule automobile destiné à un adulte. Ces sièges sont montés, soit à l'avant, soit à l'arrière du véhicule, en position face à la route ou dos à la route.

De tels sièges comportent généralement une structure rigide, de préférence monobloc, par exemple en forme de coque, qui sert d'assise et des moyens de fixation de la structure sur le siège de l'adulte.

Les moyens de fixation peuvent être des dispositifs permettant d'utiliser la ceinture de sécurité associée au siège ou des systèmes de verrouillage comportant une armature solidaire d'un des éléments du verrou coopérant avec un second élément monté sur le siège.

Une disposition de ce deuxième type est, par exemple décrite dans le document FR 2 731 187 A. Dans ce document, la fixation de l'armature est assurée par deux verrous fixés à l'avant de l'assise du siège et deux verrous fixés à l'arrière. Il présente l'avantage de permettre de fixer le siège plus sûrement et de façon plus stable qu'avec un dispositif utilisant la ceinture de sécurité montée sur le véhicule. Toutefois, il exige un nombre de verrous important; de sorte que sa mise en place peut s'avérer difficile, d'autant plus que certains des verrouillages doivent être effectués en aveugle.

L'invention a pour but de remédier à cet inconvénient en remplaçant une partie des dispositifs de verrouillage par un système de fixation de maniement plus facile.

A cet effet, l'invention a pour objet un siège pour enfant adaptable sur un siège de véhicule automobile constitué d'une assise et d'un dossier, comportant un cadre support, une anse de transport articulée sur ledit support et une structure ou coque munie de moyens de fixation sur le support. Celui-ci comporte deux flasques latéraux et au moins un élément de verrouillage, disposé en partie arrière, et coopérant avec un élément complémentaire solidaire du siège du véhicule automobile. L'anse de transport constitue en outre un bras d'appui contre le dossier du siège du véhicule apte à immobiliser le siège enfant en rotation autour de l'axe de son système de verrouillage.

Selon d'autres caractéristiques et/ou variantes de l'invention :
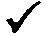 L'anse est composée d'une partie centrale formant poignée et de deux branches latérales susceptibles de pivoter autour d'un axe transversal et d'être immobilisées dans une position déterminée par un mécanisme de verrouillage agencé sur l'un au moins des flasques latéraux du support.
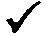 Le mécanisme de verrouillage de l'anse comprend un secteur denté solidaire de l'extrémité inférieure de sa branche latérale et concentrique à l'axe de pivotement de cette branche dont la denture coopère avec un cliquet, pivotant sur un axe monté sur le flasque.
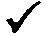 Le cliquet est solidaire d'un moyen d'accrochage de l'embout d'un câble de commande dont l'extrémité, opposée à l'embout, vient agir sur l'élément de verrouillage associé.
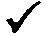 Un levier de manoeuvre est solidaire de l'axe de rotation du cliquet.
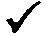 L'élément de verrouillage est constitué d'une découpe fixe, en forme de V et d'un pêne articulé autour d'un axe transversal et rappelé en position de blocage par un ressort ledit pêne coopérant avec une gâche fixée sur l'armature du siège du véhicule.
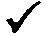 L'extrémité du câble de commande vient s'accrocher au pêne de l'élément de verrouillage.
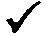 Le câble de commande est monté dans une gaine disposée entre deux butées, l'une fixée sur le flasque latéral et l'autre montée sur une partie fixe de l'élément de verrouillage.
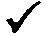 La position de l'une de ces deux butées est réglable.
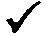 Le secteur denté comporte un cran dans lequel vient s'engager le cliquet lorsque l'anse du siège est en position verticale, de façon à bloquer celle-ci.
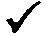 Le secteur denté porte une lumière qui, lorsque l'anse du siège est en position verticale, se trouve au droit d'un poussoir mobile monté dans un logement pratiqué dans la paroi du boîtier de protection faisant face au secteur denté et sollicité en appui sur ledit secteur denté par un moyen de rappel élastique.
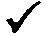 Les flasques latéraux comportent des moyens d'assemblage de la coque et du support du siège enfant qui permettent de placer la coque dudit siège, soit dans une position face à la route, soit en position dos à la route.
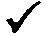 Les flasques latéraux comportent des moyens de réglage en inclinaison et/ou en translation de la position de la coque sur le support du siège enfant.

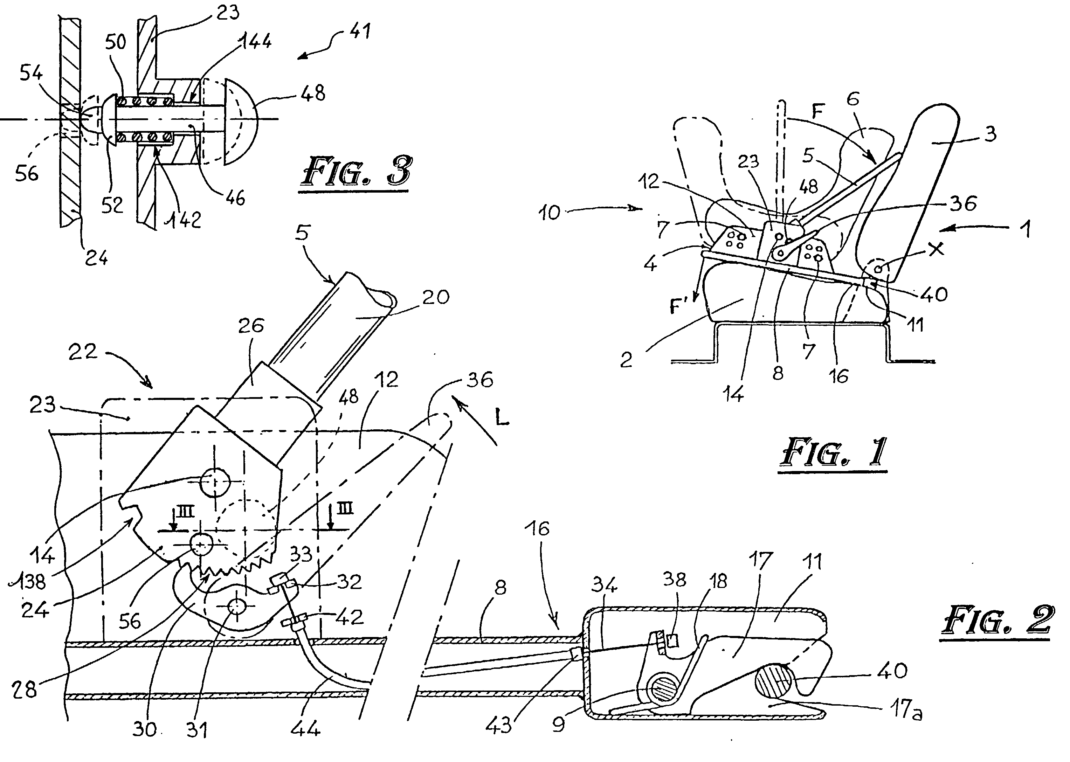

D'autres caractéristiques et avantages de l'invention apparaîtront à la lecture de la description détaillée qui va suivre, pour la compréhension de laquelle on se reportera aux dessins annexés, dans lesquels :
◆ La figure 1 est une vue latérale d'un siège pour enfant selon l'invention monté sur un siège de véhicule automobile.
◆ La figure 2 est une vue à plus grande échelle, en coupe partielle selon un plan vertical, du mécanisme d'accrochage et de verrouillage du siège de la figure 1.
◆ La figure 3 est une vue en coupe partielle selon 3-3 de la figure 2.

Sur la figure 1, on a représenté un siège 1 de véhicule automobile qui comporte, de manière habituelle une assise 2 et un dossier 3 articulé autour d'un axe transversal X permettant le réglage de l'inclinaison dudit dossier.

Sur ce siège 1 est monté un siège 10 pour enfant, représenté, en trait pleins dans une position face à la route et, en traits mixtes, dans une position dos à la route. Le siège pour enfant 10 est composé d'un cadre support 4, d'une anse 5, formant bras d'appui comme on l'expliquera plus loin, articulée sur le support 4 et d'une structure ou coque 6 munie de moyens de fixation 7 sur le support 4.

Ce support 4 peut être réalisé de différentes manières. Dans l'exemple représenté, il est composé de deux longerons 8 reliés entre eux, par exemple par deux traverses ou une platine de renfort.

Chacun des longerons 8 est muni, à l'une de ses extrémités 16, d'un élément 11 d'un système de verrouillage. Cet élément comporte une découpe 17a en forme de V réalisée dans l'extrémité du longeron et un pêne 17 articulé autour d'un axe transversal 9 et rappelé en position de blocage par un ressort 18.

Chacun des longerons 8 porte, au voisinage de sa seconde extrémité, opposée à l'extrémité 16 portant l'élément de verrouillage 11, un flasque latéral, 12.

Comme on l'a vu plus haut, le siège 10 comporte encore une anse 5 composée d'une partie centrale qui forme une poignée, et de deux branches latérales 20. Chacune de ces branches latérales est articulée sur l'un des flasques latéraux 12 du support 4, mobile en rotation autour d'un axe transversal 14.

L'anse 5, qui permet de porter le siège 10 lorsqu'il n'est pas monté dans le véhicule, constitue également un bras d'appui susceptible de pivoter autour de l'axe 14 et d'être immobilisé dans une position déterminée par un mécanisme de verrouillage 22 agencé sur l'un au moins des flasques latéraux 12.

Le mécanisme de verrouillage 22 est représenté figure 2, il est logé dans un boîtier 23 de protection et comprend un secteur denté 24 solidaire de l'extrémité inférieure 26 de la branche latérale 20 de l'anse et concentrique à l'axe 14 de pivotement de cette branche.

La denture 28 du secteur 24 coopère avec un cliquet 30, pivotant sur un axe 31 monté sur le flasque 12 parallèlement à l'axe 14. Le cliquet 30 est solidaire, d'une part, d'un moyen d'accrochage 32 de l'embout 33 d'un câble 34 et d'autre part, d'un levier de manoeuvre 36 solidaire de l'axe de rotation 31 dudit cliquet.

Le câble 34 s'étend au travers du longeron 8, associé au flasque 12, et son extrémité 38, opposée à l'embout 33, vient s'accrocher au pêne 17 de l'élément de verrouillage 11, porté par ledit longeron. Ledit câble est monté dans une gaine 44 disposée entre deux butées, une butée 42 fixée sur le flasque 12 et une butée 43 montée sur une partie fixe de l'élément de verrouillage 11.

La position de l'une des deux butées 42 ou 43 peut être réglable. Ce réglage permet de n'exercer une traction sur le câble 34, et donc de ne libérer le verrou 11, qu'après le déverrouillage du système 22 d'immobilisation de l'anse 5, comme on le verra plus tard.

On notera qu'il est prévu des moyens d'assemblage de la coque 6 et du support 4, par exemple sur les flasques latéraux, qui permettent de placer la coque du siège, soit dans une position face à la route, comme représenté en traits pleins sur la figure 1, soit dans une position dos à la route, comme représenté en traits discontinus sur la même figure. De manière connue, la fixation peut comporter un réglage de l'inclinaison du siège 10 et/ou un réglage en translation de ce siège. Ces réglages permettent d'adapter la position du siège en fonction de la morphologie de l'enfant.

Chaque verrou 11 du siège enfant 10 est fixé sur le siège 1 du véhicule au moyen d'une gâche 40, fixée sur l'armature du siège 1, à l'intersection du coussin de l'assise 2 et du dossier 3, et sur laquelle vient s'encliqueter le pêne 17 du verrou 11 associé.

Dans la réalisation représentée, la gâche 40 est une tige transversale qui constitue la partie médiane d'un arceau en forme de U qui est soudé, soit sur l'armature du dossier 3, soit sur un élément transversal suffisamment résistant de l'assise 2, par exemple une barre de renfort.

Ce dispositif constitue le système d'immobilisation du siège d'enfant dans la direction longitudinale du véhicule. Pour assurer son immobilisation en rotation autour de l'axe 40 du verrouillage, l'anse 5 constitue un bras d'appui contre le dossier 3 du siège.

Pour ce faire, elle est basculée d'une position sensiblement verticale (représentée en traits mixtes sur la figure 1) dans la direction du dossier, selon le sens de la flèche F, jusqu'à ce que sa partie centrale vienne en appui contre celui-ci. De préférence, on exerce en même temps une force F' dirigée vers le bas, sur l'extrémité libre des longerons 8.

L'engrènement du cliquet 30 sur le secteur denté 24 du système de verrouillage immobilise l'anse 5 dans la position d'appui déterminé et empêche son retour en arrière en mettant ainsi en contrainte le siège d'enfant 10 sur le siège 1 du véhicule.

La fixation du siège d'enfant 10 se trouve donc réalisée en deux opérations simples et rapides avec des moyens facilement accessibles. En outre, elle s'adapte naturellement à différentes positions angulaires de réglage du dossier du siège puisque l'anse peut prendre un nombre indéterminé de positions angulaires et que le système de verrouillage est lui-même réglable, automatiquement en fonction de ces positions.

Le démontage est aussi facile à réaliser. Il suffit de basculer le levier de manoeuvre 36 dans le sens de la flèche L (figure 2) pour libérer le cliquet 30 du secteur denté 24. En même temps une traction est exercée sur le câble 34 qui fait pivoter le pêne 17 dans sens de son déverrouillage de la gâche 40, à l'encontre du ressort de rappel 18. Le basculement de l'anse 5 vers l'avant est de nouveau possible. Il est alors possible d'extraire le siège 10 du véhicule en se servant de l'anse 5.

Lorsqu'elle est utilisée comme poignée de transport du siège, l'anse 5 doit être immobilisée dans une position sensiblement verticale.

Sur les figures 2 et 3, on a représenté deux exemples de réalisation de disposition d'immobilisation.

Le premier est constitué d'un cran 38 découpé dans le secteur denté 24 dans lequel vient s'engager le cliquet 30 lorsque l'anse 5 est en position verticale.

Le deuxième dispositif de verrouillage, comme on le voit bien sur la figure 3, est formé d'un poussoir mobile 41 monté dans un logement 142 pratiqué dans la paroi du boîtier 23 faisant face au secteur denté 24. Le fond du logement 142 est percé d'une ouverture 144 à travers laquelle passe la tige 46 du poussoir, laquelle porte à son extrémité un bouton de manoeuvre 48. Un ressort 50 est monté en appui entre le fond du logement 142 et une collerette 52 portée par l'extrémité antérieure 54 du poussoir 41. Le ressort 50 agit sur le poussoir de façon que l'extrémité 54 de celui-ci soit sollicitée en appui sur le secteur denté 24.

Le secteur denté 24 porte, de son côté, une lumière 56 qui, lorsque l'anse 5 est en position verticale, se trouve au droit du poussoir 41. L'extrémité 54 dudit poussoir vient donc alors s'engager dans la lumière 56 pour rendre solidaire le secteur denté 24 et le boîtier 23.

Pour déverrouiller l'anse, il suffit de tirer sur le bouton de manoeuvre 48 du poussoir afin de désengager son extrémité 54 de la lumière 56.

## Revendications

1. Siège (10) pour enfant adaptable sur un siège (1) de véhicule automobile constitué d'une assise (2) et d'un dossier (3), comportant un cadre support (4), une anse (5) articulée sur le support (4) et une structure ou coque (6) munie de moyens de fixations (7) sur le support (4), lequel comporte deux flasques latéraux (12) et au moins un élément de verrouillage (11), disposé en partie arrière, et coopérant avec un élément complémentaire (40) solidaire du siège (1), caractérisé en ce que l'anse (5) constitue un bras d'appui contre le dossier (3) du siège (1) apte à immobiliser le siège (10) en rotation autour de l'axe (40) du système de verrouillage (11, 40).

2. Siège pour enfant selon la revendication 1,
caractérisé en ce que l'anse (5) est composée d'une partie centrale qui forme à la fois poignée de transport et barre d'appui et de deux branches latérales susceptibles de pivoter autour d'un axe transversal (14) et d'être immobilisées dans une position déterminée par un mécanisme de verrouillage (22) agencé sur l'un au moins des flasques latéraux (12).

3. Siège pour enfant selon la revendication 2,
caractérisé en ce que le mécanisme de verrouillage (22) comprend un secteur denté (24) solidaire de l'extrémité inférieure (26) de la branche latérale (20) et concentrique à l'axe (14) de pivotement de cette branche dont la denture (28) coopère avec un cliquet (30), pivotant sur un axe (31) monté sur le flasque (12), parallèlement à l'axe (14).

4. Siège pour enfant selon la revendication 3,
caractérisé en ce que le cliquet (30) est solidaire d'un moyen d'accrochage (32) de l'embout (33) d'un câble (34) dont l'extrémité (38), opposée à l'embout (33), vient agir sur l'élément de verrouillage (11) associé.

5. Siège pour enfant selon la revendication 4,
caractérisé en ce qu'il comporte un levier de manoeuvre (36) solidaire de l'axe de rotation (31) du cliquet (30).

6. Siège pour enfant selon l'une des revendications précédentes,
caractérisé en ce que l'élément de verrouillage (11) est constitué d'une découpe fixe (17a), en forme de V, et d'un pêne (17) articulé autour d'un axe transversal (9) et rappelé en position de blocage par un ressort (18) ledit pêne coopérant avec une gâche (40) fixée sur l'armature du siège du véhicule (1).

7. Siège pour enfant selon la revendication 6,
caractérisé en ce que l'extrémité (38) du câble (34) vient s'accrocher au pêne (17) de l'élément de verrouillage (11).

8. Siège pour enfant selon l'une des revendications précédentes,
caractérisé en ce que le câble (34) est monté dans une gaine (44) disposée entre deux butées, l'une (42) fixée sur le flasque (12) et l'autre (43) montée sur une partie fixe de l'élément de verrouillage (11).

9. Siège pour enfant selon la revendication 8,
caractérisé en ce que la position de l'une des deux butées (42), (43) est réglable.

10. Siège pour enfant selon l'une des revendications précédentes,
caractérisé en ce que le secteur denté (24) comporte un cran (138) dans lequel vient s'engager le cliquet (30) lorsque l'anse (5) est en position verticale, de façon à bloquer celle-ci.

11. Siège pour enfant selon l'une des revendications précédentes,
caractérisé en ce que le secteur denté (24) porte une lumière (56) qui, lorsque l'anse (5) est en position verticale, se trouve au droit d'un poussoir mobile (41) monté dans un logement (142) pratiqué dans la paroi du boîtier (23) faisant face au secteur denté (24) et sollicité en appui sur le secteur denté (24) par un moyen de rappel élastique (50).

12. Siège pour enfant selon l'une des revendications précédentes,
caractérisé en ce que les flasques latéraux (12) comportent des moyens d'assemblage (7) de la coque (6) et du support (4) du siège (10) qui permettent de placer la coque dudit siège, soit dans une position face à la route, soit en position dos à la route.

13. Siège pour enfant selon l'une des revendications précédentes,
caractérisé en ce que les flasques latéraux (12) comportent des moyens de réglage en inclinaison et/ou en translation de la position de la coque (6) sur le support (4) du siège (10).

## Claims

1. Child seat (10) that can be fitted to a motor vehicle seat (1) constituted by a seat pad (2) and a back (3), comprising a support frame (4), a handle (5) hinged to the support (4) and a structure or shell (6) provided with means (7) for fixing to the support (4), which comprises two side plates (12) and at least one locking member (11), arranged in the rear portion, and cooperating with an additional element (40) integral with the seat (1),
characterised in that the handle (5) constitutes an arm bearing against the back (3) of the seat (1) suitable for immobilising the seat (10) in rotation about the axis (40) of the locking system (11, 40).

2. Child seat according to Claim 1,
characterised in that the handle (5) is composed of a central portion that forms both transport handgrip and bearing bar and two side branches capable of pivoting about a transverse axis (14) and of being immobilised in a position determined by a locking mechanism (22) arranged on at least one of the side plates (12).

3. Child seat according to Claim 2,
characterised in that the locking mechanism (22) comprises a toothed sector (24) integral with the lower end (26) of the side branch (20) and concentric to the axis (14) of pivoting about this branch, the toothing (28) of which co-operates with a ratchet (30), pivoting about an axis (31) mounted on the side plate (12), parallel to the axis (14).

4. Child seat according to Claim 3,
characterised in that the ratchet (30) is integral with a means (32) for catching the end (33) of a cable (34), the far end (38) of which, opposite the cable end (33), acts on the associated locking member (11).

5. Child seat according to Claim 4,
characterised in that it comprises a manoeuvring lever (36) integral with the axis of rotation (31) of the ratchet (30).

6. Child seat according to one of the preceding claims,
characterised in that the locking member (11) is constituted by a fixed V-shaped cut-out (17a), and a bolt (17) hinged about a transverse axis (9) and returned to the locking position by a spring (18), said bolt co-operating with a keeper (40) fixed to the reinforcement of the vehicle seat (1).

7. Child seat according to Claim 6,
characterised in that the far end (38) of the cable (34) is caught on the bolt (17) of the locking member (11).

8. Child seat according to one of the preceding claims,
characterised in that the cable (34) is mounted within a sheath (44) arranged between two stops, one (42) fixed to the side plate (12) and the other (43) mounted on a fixed portion of the locking member (11).

9. Child seat according to Claim 8,
characterised in that the position of one of the two stops (42), (43) is adjustable.

10. Child seat according to one of the preceding claims,
characterised in that the toothed sector (24) has a notch (138) in which the ratchet (30) engages when the handle (5) is in the vertical position, so as to lock said handle.

11. Child seat according to one of the preceding claims,
characterised in that the toothed sector (24) has an aperture (56) which, when the handle (5) is in the vertical position, is located in line with a moveable push-button (41) mounted in a recess (142) made in the wall of the housing (23) facing the toothed sector (24) and acted on and bearing against the toothed sector (24) by a resilient return means (50).

12. Child seat according to one of the preceding claims,
characterised in that the side plates (12) have means (7) for assembling the shell (6) and the support (4) of the seat (10), which make it possible to place the shell of said seat either in a position facing the road, or in a position facing away from the road.

13. Child seat for any one of the preceding claims,
characterised in that the side plates (12) have adjusting means with respect to the tilt and/or translation of the position of the shell (6) on the support (4) of the seat (10).

## Patentansprüche

1. Kindersitz (10), der an einen aus einer Sitzfläche (2) und einer Rückenlehne (3) bestehenden Fahrzeugsitz (1) anpassbar ist, mit einen Stützrahmen (4), einem an den Stützrahmen (4) angelenkten Bügel (5) und einer Struktur oder Schale (6), die mit Mitteln (7) zur Befestigung am Stützrahmen (4) versehen ist, welcher zwei seitliche Flansche (12) und mindestens ein Verriegelungselement (11) aufweist, das im hinteren Bereich angeordnet ist und mit einem komplementären Element (40) zusammenwirkt, das fest mit dem Sitz (1) verbunden ist, dadurch gekennzeichnet, daß der Bügel (5) einen Auflagearm gegen die Rückenlehne (3) des Sitzes (1) bildet, der den Sitz (10) in Drehung um die Achse (40) des Verriegelungssystems (11, 40) blockieren kann.

2. Kindersitz nach Anspruch 1, dadurch gekennzeichnet, daß der Bügel (5) aus einem einen Transportgriff und eine Auflagestange bildenden zentralen Teil und zwei Seitenarmen besteht, die um eine Querachse (14) schwenken und in einer bestimmten Stellung durch einen Verriegelungsmechanismus (22) blokkiert werden können, der an mindestens einem der seitlichen Flansche (12) angeordnet ist.

3. Kindersitz nach Anspruch 2, dadurch gekennzeichnet, daß der Verriegelungsmechanismus (22) einen fest mit dem unteren Ende (26) des Seitenarms (20) verbundenen und konzentrisch zur Schwenkachse (14) dieses Arms liegenden gezahnten Sektor (24) aufweist, dessen Zahnung (28) mit einer Raste (30) zusammenwirkt, die um eine auf den Flansch (12) montierte Achse (12) parallel zur Achse (14) schwenkt.

4. Kindersitz nach Anspruch 3, dadurch gekennzeichnet, daß die Raste (30) fest mit einem Befestigungsmittel (32) des Kabelschuhs (33) eines Kabels (34) verbunden ist, dessen dem Kabelschuh (33) entgegengesetztes Ende (38) auf das zugeordnete Verriegelungselement (11) einwirkt.

5. Kindersitz nach Anspruch 4, dadurch gekennzeichnet, daß er einen Betätigungshebel (36) aufweist, der fest mit der Drehachse (31) der Raste (30) verbunden ist.

6. Kindersitz nach einem der vorhergehenden Ansprüche, dadurch gekennzeichnet, daß das Verriegelungselement (11) aus einem ortsfesten, V-förmigen Ausschnitt (17a) und aus einem um eine Querachse (9) angelenkten und durch eine Feder (18) in die Blockierstellung gezogenen Riegel (17) besteht, der mit einer Schließeinrichtung (40) zusammenwirkt, die am Rahmen des Fahrzeugsitzes (1) befestigt ist.

7. Kindersitz nach Anspruch 6, dadurch gekennzeichnet, daß das Ende (38) des Kabels (34) am Riegel (17) des Verriegelungselements (11) befestigt wird.

8. Kindersitz nach einem der vorhergehenden Ansprüche, dadurch gekennzeichnet, daß das Kabel (34) in eine Hülle (44) eingesetzt ist, die zwischen zwei Anschlägen angeordnet ist, von denen der eine (42) am Flansch (12) befestigt und der andere (43) auf einen ortsfesten Teil des Verriegelungselements (11) montiert ist.

9. Kindersitz nach Anspruch 8, dadurch gekennzeichnet, daß die Stellung eines dieser beiden Anschläge (42, 43) einstellbar ist.

10. Kindersitz nach einem der vorhergehenden Ansprüche, dadurch gekennzeichnet, daß der gezahnte Sektor (24) eine Kerbe (138) aufweist, in die sich die Raste (30) einfügt, wenn der Bügel (5) sich in der senkrechten Stellung befindet, um den Bügel zu blockieren.

11. Kindersitz nach einem der vorhergehenden Ansprüche, dadurch gekennzeichnet, daß der gezahnte Sektor (24) eine Öffnung (56) besitzt, die, wenn der Bügel (5) in der senkrechten Stellung ist, sich im rechten Winkel vor einem beweglichen Drücker (41) befindet, der in einen Sitz (142) eingebaut ist, der in der Wand des Gehäuses (23) ausgebildet ist, die dem gezahnten Sektor (24) gegenüber liegt, und der von einem elastischen Rückholmittel (50) gegen den gezahnten Sektor (24) in Anlage gezogen wird.

12. Kindersitz nach einem der vorhergehenden Ansprüche, dadurch gekennzeichnet, daß die seitlichen Flansche (12) Einrichtungen (7) zum Zusammenbau der Schale (6) und des Stützrahmens (4) des Sitzes (10) aufweisen, die es ermöglichen, die Schale des Sitzes entweder in eine Stellung in Fahrtrichtung oder in eine Stellung gegen die Fahrtrichtung anzuordnen.

13. Kindersitz nach einem der vorhergehenden Ansprüche, dadurch gekennzeichnet, daß die seitlichen Flansche (12) Mittel zur Einstellung der Neigung und/oder der Translationsverschiebung der Stellung der Schale (6) auf dem Stützrahmen (4) des Sitzes (10) aufweisen.
